# EUROPEAN PATENT SPECIFICATION

(11) **EP 2 321 506 B1**
(45) Date of publication and mention of the grant of the patent: **02.01.2013**
(21) Application number: 09776233.0
(22) Date of filing: 06.07.2009
(51) Int. Cl.: F01N 9/00, F01N 3/20, F01N 11/00

(54) **DOSING SYSTEM FOR USE IN AN EXHAUST SYSTEM OF A COMBUSTION ENGINE**
DOSIERSYSTEM ZUR VERWENDUNG IN EINEM AUSLASSSYSTEM EINES VERBRENNUNGSMOTORS
SYSTÈME DE DOSAGE DESTINÉ À ÊTRE UTILISÉ DANS UN SYSTÈME D'ÉCHAPPEMENT D'UN MOTEUR À COMBUSTION

(30) Priority: 07.07.2008 DK 200800953
(43) Date of publication of application: 18.05.2011
(73) Proprietor: Emitec Denmark A/S, 8960 Randers (DK)
(72) Inventor: PLOUGMANN, Jan, DK-8240 Risskov (DK)
(74) Representative: Plougmann & Vingtoft A/S
(86) International application number: PCT/DK2009/050164
(87) International publication number: WO 2010/003424

(56) References cited:
- EP-A- 1 672 191
- EP-A- 1 933 014
- DE-A1-102006 053 485
- FR-A- 2 839 743
- JP-A- 2003 201 836

## Description

### FIELD OF THE INVENTION

The present invention relates to a dosing system for dosing a first fluid into a stream of a second fluid, and in particular to a dosing system for dosing a reducing agent into an exhaust pipe of a combustion engine.

### BACKGROUND OF THE INVENTION

In order to lower the emission of pollutants, such as nitrogen oxides, from the exhaust gasses of combustion engines, reducing agent, such as e.g. liquefied urea, is often introduced into the exhaust systems. This is typically done by use of a nozzle that ensures atomization of the reducing agent. In some dosing systems, the current amount of reducing agent is determined to correlate to the current demand which depends on e.g. the fuel consumption. The introduction of reducing agents often results in deposits in the form of crystals or amorphous structures building up in the nozzles used to deliver the reducing agent. These deposits grow in size over time and thereby result in a poorer atomization, a poorer control of the delivered amount and eventually a total clogging up of the nozzle outlet. The deposits must therefore be removed from time to time which requires dismantling of parts of the system.

EP1672191A1 discloses an exhaust gas cleaner and relates to the problem of how to avoid clogging of the injection nozzle which supplies a reducing agent to the exhaust gas in the exhaust gas passage. A lower limit for the supply quantity of reducing agent is used to ensure that the nozzle is cooled to below the temperature at which the urea crystallizes so that clogging is prevented. EP1933014A1 discloses an exhaust gas purification device where the amount of reducing agent to be injected is adjusted to take into account whether the engine works in highland or lowland areas as this influences the exhaust gas temperature due to changes in atmospheric pressure.

Hence, an improved system and method for removal of nitrogen oxides from exhaust gasses without build-up of deposit would be advantageous.

### OBJECT OF THE INVENTION

In accordance with the present invention, it has been realized that formation of deposits particularly occurs when there is no flow of fluid through the nozzle while the exhaust gas and the exhaust pipe are still hot. This may be the case in a number of situations including:
- When the actual demand is determined mainly from measurements of the actual fuel consumption, and the fuel consumption is very low e.g. when the vehicle motor brakes.
- When there are errors in the communication between the vehicle and the dosing system, these errors resulting in a "no dosing" signal.
- When the vehicle regenerates the particulate filter which results in increased temperature of the exhaust pipe. The increased temperature may result in formation of deposits from reducing agent present in the nozzle.
- When the vehicle engine is switched off but the exhaust pipe is still warm enough to result in deposits being formed; the critical temperature depends on the reducing agent.

Based on the above realizations, an object of the present invention is to provide a dosing system in which the clogging up of the nozzle may be avoided.

It is a further object of the present invention to provide an alternative to the prior art.

### SUMMARY OF THE INVENTION

Thus, the above described object and several other objects are intended to be obtained in a first aspect of the invention by providing a dosing system for dosing a first fluid into a stream of a second fluid, the system comprising
- a valve,
- a nozzle having an outlet arranged downstream of the valve,
- a flow passage through which the first fluid can flow from a reservoir to the nozzle outlet via the valve,
- a control system adapted to receive input from one or more sensors and based thereon determine a request value based on which a valve opening period is determined,
- wherein the valve opening period is different from zero and independent on the request value when the request value is below a predefined threshold value,
- wherein the input from the one or more sensors comprises measures of the temperature of a wall of a pipe through which the second fluid flows, and
- wherein the first fluid is not added when the temperature of the wall of the pipe is below a predetermined critical temperature T_{cr}.

The valve preferably has a closed state in which the first fluid cannot flow through the valve and at least one open state in which the first fluid can flow through the valve; the latter is called "the valve opening period". The actual control parameters used may not be the valve opening period but rather the time at which the valve is opened and the time at which the valve is closed. The difference there between is the time opening period.

In addition to the valve opening period, the flow of fluid through the valve may also be controlled by varying other parameters, such as the pressure. A further possibility is to supply the first fluid with pressure waves. The control system may also use further parameters than those measured by the sensors in the determination of the request value. The determinations may be based on predefined relationships between the request value and the further parameters, the relations being determined from e.g. experiments or computer simulations.

The dosing system may further comprise pumping means for pumping the first fluid through the dosing system. Alternatively the reservoir in which the first fluid is stored is pressurized, so that an opening of the valve will result in a flow of first fluid towards the nozzle.

The first fluid may flow out of the nozzle outlet intermittently at least when the request value is below the threshold value. By intermittently is preferably meant that the valve is open for a period of time followed by a period in which it is closed. The opening time and closed time may be of equal or different length. The intermittent flow enables that even small doses of the first fluid can flow through the nozzle under high pressure without unnecessary use of first fluid. A high pressure is used to flush the nozzle and thereby remove possible deposits formed in the nozzle.

In some embodiments of the invention, the nozzle comprises the valve. Hereby a compact and fluid-tight solution may be obtained. Alternatively the nozzle and valve are separate units which are to be connected by any suitable means preferably while ensuring a non-leaking connection.

In preferred embodiments, the nozzle may comprise an atomization device. Such a device is used to provide atomization of first fluid which atomization typically results in an efficient reaction between the first and second fluids.

Such an atomization device may comprise at least two converging nozzle channels. Hereby the atomization can be obtained by letting fluid jets flowing through the nozzle channels impinge each other.

The input from the one or more sensors may comprise measures of the temperature of the second fluid. When the dosing system is arranged on a combustion engine vehicle, the input from the one or more sensors may comprise measures of one or more of the following parameters: the actual fuel consumption, revolutions per minute, and the loading of the engine. Other inputs may be used in addition to those specifically mentioned.

In an embodiment of the invention, the first liquid is a reducing agent, such as liquefied urea, and the second fluid is exhaust gasses from a combustion engine. A detailed description of such an embodiment is given below.

A second aspect of the invention relates to an exhaust system comprising
- a dosing system as described above, and
- an exhaust pipe through which the second fluid flows,
wherein the nozzle outlet is arranged so as to feed the first fluid into the second fluid.

A third aspect of the invention relates to a method of dosing a first fluid into a stream of a second fluid by use of a dosing system comprising a valve, a nozzle having an outlet arranged downstream of the valve, a flow passage through which the first fluid can flow from a reservoir to the nozzle outlet via the valve, and a control system, the method comprising:
- measuring one or more parameter values by use of one or more sensors,
- using the measured values as input to a control system,
- determining a request value based on the input,
- comparing the request value with a predetermined threshold value, and
- when the request value is below the predetermined threshold value determining a valve opening period which is independent on the request value, and when the request value is above or equal to the predetermined threshold value determining a valve opening period which is dependent on the request value,
- wherein the input from the one or more sensors comprises measures of the temperature of a wall of a pipe through which the second fluid flows, and
- wherein the first fluid is not added when the temperature of the wall of the pipe is below a predetermined critical temperature T_{cr}.

The valve opening period and possibly also other parameters, such as the pressure of the first fluid, is determined so that a required amount of the first fluid is fed into the second fluid. What "a required amount" is, is predetermined e.g. from experiments or computer simulations.

These and other aspects of the invention will be apparent from and elucidated with reference to the embodiments described hereinafter.

### BRIEF DESCRIPTION OF THE FIGURES

A dosing system according to the invention will now be described in more detail with regard to the accompanying figures. The figures show one way of implementing the present invention and are not to be construed as being limiting to other possible embodiments falling within the scope of the attached claim set.
Figure 1 shows schematically a dosing system according to the invention arranged in combination with a combustion engine.
Figure 2 shows schematically an overall idea on which the invention is based.
Figure 3 is a flow diagram of a method according to the invention.
Figure 4 illustrates an example of a running scenario for a vehicle provided with a dosing system according to the present invention.

### DETAILED DESCRIPTION OF AN EMBODIMENT

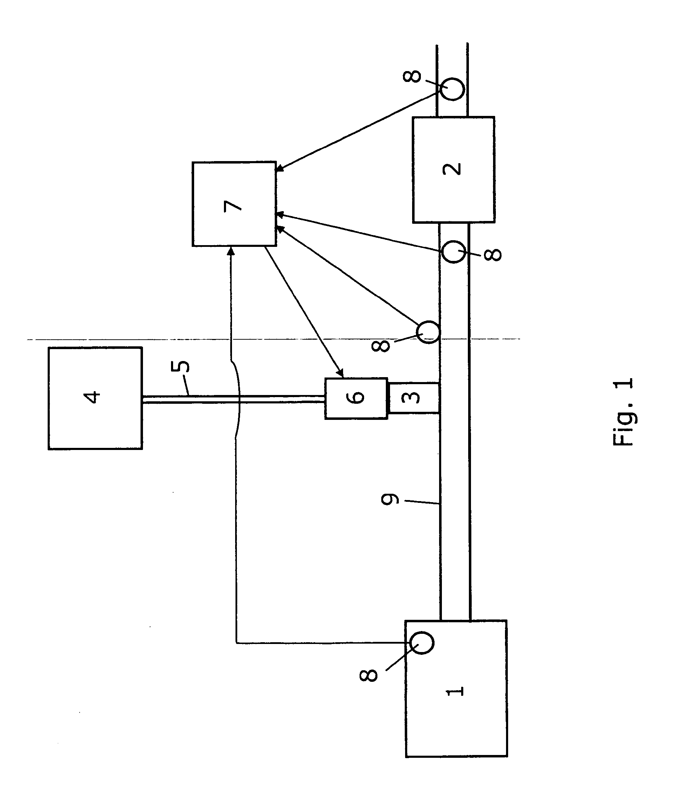

The following description of a preferred embodiment of the invention relates to a combustion system having a dosing system according to the present invention. A schematic illustration of such a combustion system is given in figure 1. In this embodiment the first fluid referred to above is a reducing agent, and the second fluid is exhaust gas from a combustion engine.

In a combustion engine vehicle, the exhaust gas leaving the engine 1 comprises nitrogen oxides before it enters into the catalytic system 2. After the exhaust gas has passed through the catalytic system 2, the gas comprises nitrogen and water which is typically discharged to the environment. It is known that this process is significantly improved if a reducing agent, such as liquefied urea, is sprayed into the exhaust gas by use of a nozzle 3 before it enters the catalytic system 2. The reduction agent is stored in a tank 4 and led to the nozzle 3 via a pipe 5 and a valve 6. The tank 4 in which the reducing agent is stored may be pressurized, or the reducing agent may be pumped to the nozzle 3 by a pump (not shown).

The dosing system comprises a valve 6 having a closed state in which the reducing agent cannot flow through the valve 6 and an open state in which the reducing agent can flow through the valve 6. In figure 1 the valve 6 and the nozzle 3 are shown as separate units, but the valve 6 may also be comprised in the nozzle 3. In embodiments where the nozzle 3 and valve 6 are separate units, the valve 6 may be placed anywhere between the tank 4 and the nozzle 3. More than one valve 6 may also be used. The dosing of reducing agent is controlled by a control system 7 receiving input from a number of sensors 8. The embodiment illustrated in figure 1 comprises sensors 8 arranged so that they can measure one or more characteristic(s) of the engine 1, the temperature of the wall of the exhaust pipe 9 and the temperature of the exhaust gas, respectively. The characteristics of the engine 1 may include the fuel consumption, revolutions per minute and the loading of the engine. The monitoring thereof is illustrated schematically by one sensor 8 only although in practice different characteristics may be monitored by different sensors. Other sensors may also be used in addition to or instead of those illustrated. Based on input from the sensors 8, the control system 7 determines the current demand for reducing agent, Q_{demand} which is also called a request value, and the valve 6 is controlled in response thereto so that the determined amount of reducing agent is sprayed into the exhaust gas. The valve 6 is typically controlled in a pulse width modulated (PMW) manner whereby it is possible to ensure sufficient atomisation of the reducing agent even for relatively small demands.

A first reason for basing the determination of the amount of reducing agent on the temperature of the wall of the exhaust pipe 9 and/or the temperature of the exhaust gas is that the reaction between most reducing agents and the NOx only takes place to a sufficiently large extent above a certain temperature. In the following, reference is made to a critical temperature, T_{cr}, which may be either a temperature of the exhaust pipe 9, a temperature of the exhaust gas, or a theoretical value determined from measures of the two first mentioned. Such a theoretical value could e.g. be a weighed average, the weight factors being determined e.g. from tests or simulations. In preferred embodiments of the invention, the temperature of the exhaust gas is determined before and after passing through the catalytic system, and T_{cr} is the lowest of those. This way of determining T_{cr} is based on the assumption that when the temperature is above T_{cr} both before and after the catalytic system 2, it is also above T_{cr} inside the catalytic system 2. Alternatively or in addition thereto, the temperature could be measured by a sensor placed inside the catalytic system 2. The determination of the needed amount of reducing agent is then based on a known dependence on T_{cr}. The dependence on T_{cr} may e.g. be determined from physical tests and/or computer simulations.

In known systems for dosing reducing agent to exhaust gasses, the amount of reducing agent is determined mainly from measures of the fuel consumption, the number of revolutions and the loading of the engine 1. However, in connection with the present invention it has been found that deposits from the reducing agent are also formed in the nozzle 3 when the demand for reducing agent determined from these parameters is very low or zero. This is particularly the case if the valve 6 is leaking resulting in a flow with very low pressure dripping through the nozzle 3. A situation with very little or no flow may also take place when the vehicle motor brakes or even is switched off while the exhaust pipe still has a high temperature.

A second reason for basing the determination of the amount of reducing agent on the temperature of the exhaust gas is therefore that it has been found advantageous to spray reducing agent into the exhaust pipe even when Q_{demand} is zero. When this reducing agent is supplied at high pressure, the nozzle 3 is flushed and thereby cleared from deposits which have built-up inside the nozzle 3. A high pressure without unnecessary use of reducing agent is typically obtained by supplying the reducing agent intermittently. By intermittently is preferably meant that the valve 6 is open for a short period of time followed by a period in which it is closed. The valve opening period may e.g. be 30 ms, and the period between each dose may e.g. be 30 s. The pressure is typically in the order of 5 to 20 bars. With typical nozzle dimensions and pressures used in an exhaust system, a valve opening period of 30 ms typically results in a dose of 0.033-0.05 ml/dose.

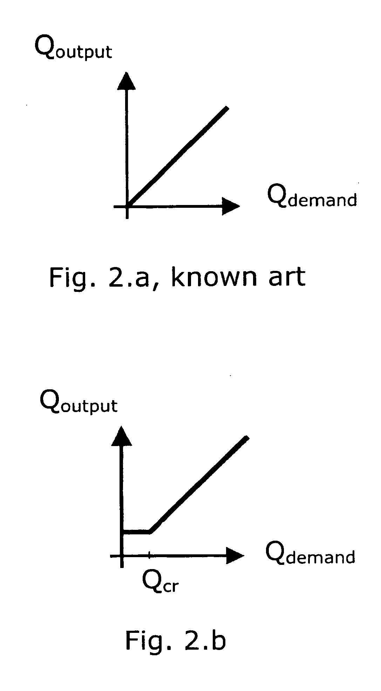

In the following two modes of operation are referred to: dosing and purging. "Dosing" is preferably used to designate the periods in which the request value, Q_{demand}, determined from inputs from the sensors is at or above a predetermined threshold value, Q_{cr}. In this mode, the current supply of reducing agent typically varies in response to parameters such as the fuel consumption. "Purging" is preferably used to designate the periods in which Q_{demand} determined from inputs from the sensors 8 is below Q_{cr}. In this mode, the supply of reducing agent is typically supplied intermittently as described above but with a substantially constant amount being supplied during a time period covering one pulse. Figure 2 illustrates schematically the overall difference between a known system and a system according to the present invention. Figure 2.a illustrates a known system having a linear relationship between the demanded amount, Q_{demand}, and the amount supplied through the nozzle, Qₒᵤₜₚᵤₜ. Figure 2.b illustrates in a corresponding way the idea of the present invention that when Q_{demand} is below a threshold value, Q_{cr}, a constant amount of reducing agent is added to the exhaust gas. As described above, "constant" is not necessarily to be understood as if the valve 6 is constantly open. When the vehicle is running and the determined temperature, T, of the exhaust gas and/or the exhaust pipe (see details of how it may be determined above) is above a critical temperature, T_{cr}, , Q_{demand} mainly or fully depends on engine parameters such as the fuel consumption. The actual relationships may be linear or have any characteristic which will be well-known to a person skilled in the art.

Tests have been carried out in exhaust systems where liquefied urea was used as reducing agent. It was found that when the engine 1 was switched off but the temperature inside the exhaust pipe 9 was still above around 200°C, urea deposits were formed in the nozzle 6. Therefore, in this case T_{cr} may be set to 200°C. However, deposit formation may also start at 170-180°C, and the actual T_{cr} should therefore be adjusted to a specific application.

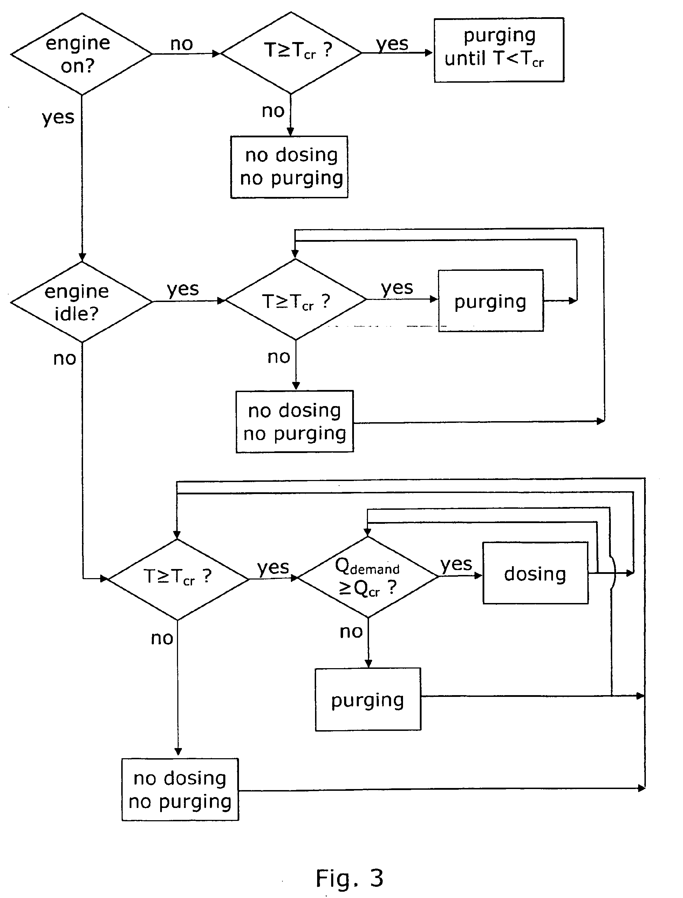

Steps involved in the application of a method according to the present invention are described in the flow diagram in figure 3. The figure is to be understood so that it should be re-read from the top left corner each time the engine 1 is switched on or off and each time there is a change between idle and running. In the top left corner is shown a determination of whether or not the engine 1 is switched on. It may be necessary to keep supplying reducing agent in purging mode even after the engine 1 has been switched off for as long as the determined temperature, T, is above T_{cr} in order to keep removing deposits from the nozzle 3 for as long as they may be formed. When the engine 1 is idle, T is also compared to T_{cr} resulting in purging when T≥T_{cr}. Both when it is idle and when it is not (i.e. the vehicle is running), the comparison between T and T_{cr} must be repeated at regular time intervals or constantly, since T is likely to vary over time when the engine 1 is idle due to heating up or cooling down of the exhaust gas and/or the exhaust pipe 9. When the vehicle is running, the first step is again to determine whether T≥T_{cr} and if it is to start the addition of reducing agent in response to input from the sensors 8. The reason why reducing agent is preferably never added when T<T_{cr} is that the reaction between most reducing agents and the NOx only takes place to a critical extent above a certain temperature. When the vehicle is running and T≥T_{cr}, a demanded amount, Q_{demand}, is determined based on the current fuel consumption and possibly other parameters. As described in relation to figure 2, the dosing system runs in dosing mode when Q_{demand}≥Q_{cr} and in purging mode when Q_{demand}<Q_{cr}.

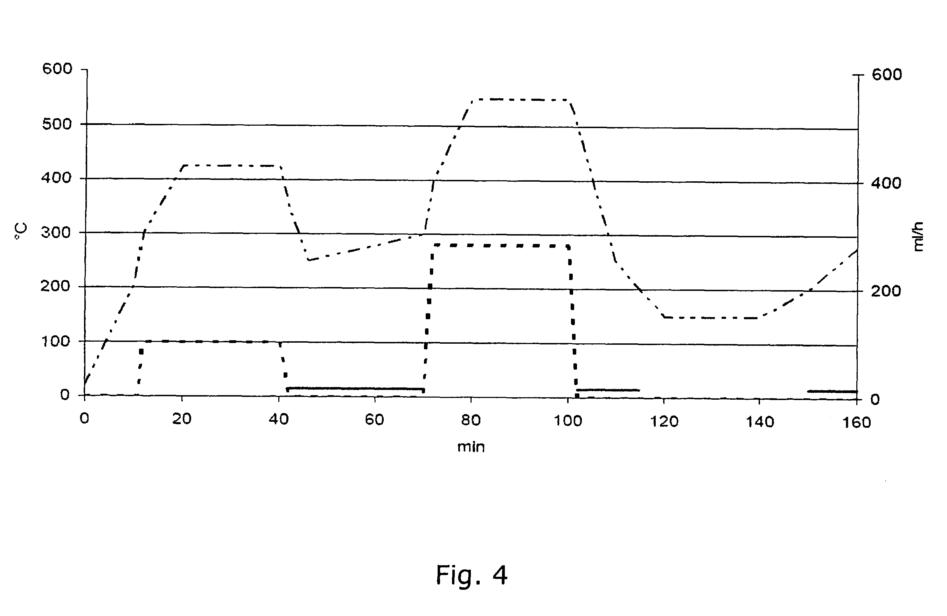

Figure 4 illustrates a possible running scenario for a vehicle provided with a dosing system according to the present invention. The dashed line represents the requested dosing, Q_{demand}, which in the figure is given in ml/hour as shown on the right-hand γ-axis. The dash-dot-dot line represents the temperature of the exhaust gas as shown on the left-hand γ-axis, and the solid line represents the purging. The engine is assumed to be switched on at time equal to zero, and T_{cr} is set to 200°C. When the temperature reaches T_{cr}, the dosing system runs in dosing mode where the amount of supplied reducing agent is determined as described above. When Q_{demand} falls to below Q_{cr} at around 41 min, and T is still above 200°C, the system switches to purging mode. This is typically the case when the engine is idle. Around 70 min, Q_{demand} increases to above Q_{cr}, and the system switches to dosing mode. Around 115 min, the system is in purging mode, and T falls below 200°C resulting in a situation with no dosing and no purging.

The flow of reducing agent through the nozzle even when the request value is below a predefined threshold value may prevent clogging up of the nozzle for at number of reasons including:
- Clearing the nozzle from any deposits formed therein by flushing with reducing agent at high pressure.
- Renewing the reducing agent in the nozzle results in a decrease in the concentration inside the nozzle.
- Cooling of the nozzle.

In the embodiments illustrated above, the dosing system comprises only one nozzle. However, the system may comprise two or more nozzles, which may e.g. be arranged circumferentially in the wall of the exhaust pipe. The reducing agent may be supplied to all nozzles via one valve, there may be one valve per nozzle, or a number of valves may each be used to control the flow of reducing agent to two or more nozzles.

In addition to the examples given above, a situation in which Q_{demand} is very low or zero is when this is due to errors in the system, such as errors in the transmission of signals from the sensors, resulting in an erroneous Q_{demand} being determined. In a known system this could result in no supply of reducing agent through the nozzle. In a dosing system according to the present invention, such a situation would result in the system running in purging mode. This could mean an insufficient reduction of the pollutants, but at least the nozzle would not clog up.

Although the present invention has been described in connection with the specified embodiments, it should not be construed as being in any way limited to the presented examples. The present invention has been described in relation to a combustion system having a dosing system according to the claims. However, the invention may also find use on other systems where it is relevant to dose a first fluid into a stream of a second fluid while ensuring that when Q_{demand}<Q_{cr}, a constant amount of first fluid is dosed independently of input from sensors. An example of a further application is for the exothermic media injected into the diesel particulate filter to burn out the carbon deposits.

The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A dosing system for dosing a first fluid into a stream of a second fluid, the system comprising
- a valve (6),
- a nozzle (3) having an outlet arranged downstream of the valve (6),
- a flow passage (5) through which the first fluid can flow from a reservoir (4) to the nozzle outlet via the valve (6),
- a control system (7) adapted to receive input from one or more sensors (8) and based thereon determine a request value based on which a valve opening period is determined,
- wherein the valve opening period is different from zero and independent on the request value when the request value is below a predefined threshold value,
- wherein the input from the one or more sensors (8) comprises measures of the temperature of a wall of a pipe (9) through which the second fluid flows, and
- wherein the first fluid is not added when the temperature of the wall of the pipe (9) is below a predetermined critical temperature T_{cr}.

2. A dosing system according to claim 1 further comprising pumping means for pumping the first fluid through the dosing system.

3. A dosing system according to claim 1 or 2, wherein the first fluid flows out of the nozzle outlet intermittently at least when the request value is below the threshold value.

4. A dosing system according to any of the preceding claims, wherein the nozzle (3) comprises the valve (6).

5. A dosing system according to any of the preceding claims, wherein the nozzle (3) comprises an atomization device.

6. A dosing system according to claim 5, wherein the atomization device comprises at least two converging nozzle channels.

7. A dosing system according to any of the preceding claims, wherein the input from the one or more sensors (8) comprises measures of the temperature of the second fluid.

8. A dosing system according to any of the preceding claims, wherein the dosing system is arranged on a combustion engine vehicle, and wherein the input from the one or more sensors (8) comprises measures of one or more of the following parameters: the actual fuel consumption, revolutions per minute, and the loading of the engine (1).

9. A dosing system according to any of the preceding claims, wherein the first liquid is a reducing agent, such as liquefied urea, and the second fluid is exhaust gasses from a combustion engine (1).

10. An exhaust system comprising
- a dosing system according to any of the preceding claims, and
- an exhaust pipe (9) through which the second fluid flows,
wherein the nozzle outlet is arranged so as to feed the first fluid into the second fluid.

11. A method of dosing a first fluid into a stream of a second fluid by use of a dosing system comprising a valve (6), a nozzle (3) having an outlet arranged downstream of the valve (6), a flow passage (5) through which the first fluid can flow from a reservoir (4) to the nozzle outlet via the valve (6), and a control (7) system, the method comprising:
- measuring one or more parameter values by use of one or more sensors (8),
- using the measured values as input to the control system (7),
- determining a request value based on the input,
- comparing the request value with a predetermined threshold value, and
- when the request value is below the predetermined threshold value determining a valve opening period which is independent on the request value, and when the request value is above or equal to the predetermined threshold value determining a valve opening period which is dependent on the request value,
- wherein the input from the one or more sensors (8) comprises measures of the temperature of a wall of a pipe (9) through which the second fluid flows, and
- wherein the first fluid is not added when the temperature of the wall of the pipe (9) is below a predetermined critical temperature T_{cr}.

12. A method according to claim 11 further comprising pumping the first fluid through the dosing system.

13. A method according to claim 11 or 12, wherein the first fluid flows out of the outlet intermittently at least when the request value is below the threshold value.

14. A method according to any of claims 11-13, wherein the input from the one or more sensors (8) comprises measures of the temperature of the second fluid.

15. A method according to any of claims 11-14, wherein the dosing system is arranged on a combustion engine vehicle, and wherein the input from the one or more sensors (8) comprises measures of one or more of the following parameters: the actual fuel consumption, revolutions per minute, and the loading of the engine.

16. A method according to any of claims 11-15, wherein the first liquid is a reducing agent, such as liquefied urea, and the second fluid is exhaust gasses from a combustion engine (1).

## Patentansprüche

1. Dosiersystem zur Dosierung eines ersten Fluids in eine Strömung eines zweiten Fluids, wobei das System Folgendes umfasst:
- ein Ventil (6),
- eine Düse (3), welche einen Auslass aufweist, der stromabwärts des Ventils (6) angeordnet ist,
- einen Strömungsdurchgang (5), durch welchen das erste Fluid von einem Tank (4) über das Ventil (6) zum Düsenauslass fließen kann,
- ein Kontrollsystem (7), welches dazu eingerichtet ist, Eingangsgrößen von einem oder mehreren Sensoren (8) zu empfangen und darauf basierend einen Anfragewert zu bestimmen, aus welchem eine Ventilöffnungsdauer bestimmt wird,
- wobei die Ventilöffnungsdauer ungleich null und unabhängig von dem Anfragewert ist, wenn der Anfragewert unterhalb eines vorgegebenen Grenzwertes ist,
- wobei die Eingangsgrößen von dem einen oder mehreren Sensoren (8) Messewerte einer Temperatur einer Wandung einer Leitung (9) umfassen, durch welche das zweite Fluid fließt, und
- wobei das erste Fluid nicht zugeführt wird, wenn die Temperatur der Wand der Leitung (9) unterhalb einer vorgegebenen kritischen Temperatur T_{cr} liegt.

2. Dosiersystem gemäß Anspruch 1, welches weiterhin Pumpenmittel zum Pumpen des ersten Fluids durch das Dosiersystem umfasst.

3. Dosiersystem gemäß Anspruch 1 oder 2, wobei das erste Fluid aus dem Düsenauslass intermittierend hinausströmt, zumindest wenn der Anfragewert unterhalb des Grenzwertes liegt.

4. Dosiersystem gemäß einem der vorhergehenden Ansprüche, wobei die Düse (3) das Ventil (6) umfasst.

5. Dosiersystem gemäß einem der der vorhergehenden Ansprüche, wobei die Düse (3) eine Zerstäubungseinheit umfasst.

6. Dosiersystem gemäß Anspruch 5, wobei das Zerstäubungselement wenigstens zwei konvergierende Düsenkanäle umfasst.

7. Dosiersystem gemäß einem der vorhergehenden Ansprüche, wobei die Eingangsgrößen von dem einen oder mehreren Sensoren (8) Messwerte der Temperatur des zweiten Fluids umfassen.

8. Dosiersystem gemäß einem der vorhergehenden Ansprüche, wobei das Dosiersystem an einem Fahrzeug mit einer Verbrennungskraftmaschine angeordnet ist, und wobei die Eingangsgrößen von dem einen oder mehreren Sensoren (8) Messwerte von einem oder mehreren der folgenden Parameter umfassen: der tatsächliche Kraftstoffverbrauch, Umdrehungen pro Minute und die Last der Verbrennungskraftmaschine (1).

9. Dosiersystem gemäß einem der vorhergehenden Ansprüche, wobei die erste Flüssigkeit ein Reduktionsmittel wie flüssige Harnstoff-Wasser-Lösung ist und das zweite Fluid Abgas von einer Verbrennungskraftmaschine (1) ist.

10. Ein Abgassystem umfassend
- ein Dosiersystem gemäß einem der vorhergehenden Ansprüche und
- eine Abgasleitung (9), durch welche das zweite Fluid strömt,
wobei der Düsenauslass so angeordnet ist, dass das erste Fluid in das zweite Fluid zugeführt wird.

11. Verfahren zur Dosierung eines ersten Fluids in eine Strömung eines zweiten Fluids, wobei ein Dosiersystem umfassend zumindest ein Ventil (6), eine Düse (3) mit einem Auslass, der stromabwärts des Ventils (6) angeordnet ist, einen Strömungsdurchgang (5), durch welchen das erste Fluid von einem Tank (4) über das Ventil (6) zu dem Düsenauslass fließen kann, und ein Kontrollsystem (7), wobei das Verfahren folgendes umfasst:
- Messung von einem oder mehreren Parameterwerten mit Hilfe von einem oder mehreren Sensoren (8),
- Verwendung der Messwerte als Eingangsgrößen für das Kontrollsystem (7),
- Bestimmen eines Anfragewertes basierend auf den Eingangsgrößen,
- Vergleichen des Anfragewertes mit einer vorgegebenen Grenzwert, und
- wenn der Anfragewert unterhalb des vorgegebenen Grenzwertes ist, bestimmen einer Ventilöffnungsdauer, die unabhängig von dem Anfragewert ist, und wenn der Anfragewert oberhalb oder gleich dem vorgegebenen Grenzwert ist, bestimmen einer Ventilöffnungszeit, welche abhängig von dem Anfragewert ist,
- wobei die Eingangsgrößen von dem einen oder mehreren Sensoren (8) Messungen einer Temperatur einer Wand einer Leitung (9) umfassen, durch welche das zweite Fluid strömt, und
- wobei das erste Fluid nicht zugeführt wird, wenn die Temperatur der Wand der Leitung (9) unterhalb einer vorgegebenen kritischen Temperatur T_{cr} liegt.

12. Verfahren gemäß Anspruch 11, welches weiterhin ein Pumpen des ersten Fluids durch das Dosiersystem umfasst.

13. Verfahren gemäß Anspruch 11 oder 12, wobei das erste Fluid aus dem Auslass intermittierend hinausströmt, zumindest wenn der Anfragewert unterhalb des Grenzwertes ist.

14. Verfahren gemäß einem der Ansprüche 11 - 13, wobei die Eingangsgrößen von dem einen oder mehreren Sensoren (8) wenigstens Messwerte der Temperatur des zweiten Fluids umfassen.

15. Verfahren gemäß einem der Ansprüche 11 - 14, wobei das Dosiersystem in einem Fahrzeug mit einer Verbrennungskraftmaschine angeordnet ist und wobei die Eingangsgrößen von dem einen oder mehreren Sensoren (8) Messwerte von einem oder mehreren der folgenden Parameter umfassen: der tatsächliche Verbrauch der Verbrennungskraftmaschine, Umdrehungen pro Minute, und der Last der Verbrennungskraftmaschine.

16. Verfahren gemäß einem der Ansprüche 11 - 15, wobei die erste Flüssigkeit ein Reduktionsmittel wie flüssige Harnstoff-Wasser-Lösung ist und das zweite Fluid Abgas einer Verbrennungskraftmaschine (1) ist.

## Revendications

1. Système de dosage destiné à doser un premier fluide dans un flux d'un deuxième fluide, le système comprenant
- une valve (6),
- une buse (3) possédant une sortie disposée en aval de la valve (6),
- un passage d'écoulement (5) au travers duquel le premier fluide peut s'écouler depuis un réservoir (4) vers la sortie de la buse en passant par la valve (6),
- un système de commande (7) adapté pour recevoir une entrée provenant d'un ou plusieurs capteurs (8) et, sur la base de celle-ci, déterminer une valeur de demande sur la base de laquelle est déterminée une période d'ouverture de valve,
- dans lequel la période d'ouverture de valve est différente de zéro et indépendante de la valeur de demande quand la valeur de demande est inférieure à une valeur seuil prédéfinie,
- dans lequel l'entrée provenant des un ou plusieurs capteurs (8) comprend des mesures de la température d'une paroi d'un tuyau (9) au travers duquel s'écoule le deuxième fluide, et
- dans lequel le premier fluide n'est pas ajouté quand la température de la paroi du tuyau (9) est inférieure à une température critique T_{cr} prédéterminée.

2. Système de dosage selon la revendication 1 comprenant en outre un moyen de pompage pour pomper le premier fluide dans le système de dosage.

3. Système de dosage selon la revendication 1 ou 2, dans lequel le premier fluide s'écoule par la sortie de la buse par intermittence au moins quand la valeur de demande est inférieure à la valeur seuil.

4. Système de dosage selon l'une quelconque des revendications précédentes, dans lequel la buse (3) comprend la valve (6).

5. Système de dosage selon l'une quelconque des revendications précédentes, dans lequel la buse (3) comprend un dispositif d'atomisation.

6. Système de dosage selon la revendication 5, dans lequel le dispositif d'atomisation comprend au moins deux canaux de buse convergents.

7. Système de dosage selon l'une quelconque des revendications précédentes, dans lequel l'entrée provenant des un ou plusieurs capteurs (8) comprend des mesures de la température du deuxième fluide.

8. Système de dosage selon l'une quelconque des revendications précédentes, dans lequel le système de dosage est disposé sur un véhicule à moteur à combustion, et dans lequel l'entrée provenant des un ou plusieurs capteurs (8) comprend des mesures d'un ou plusieurs des paramètres suivants :
consommation de carburant réelle, tours par minute, et charge du moteur (1).

9. Système de dosage selon l'une quelconque des revendications précédentes, dans lequel le premier liquide est un agent réducteur, tel que l'urée liquéfiée, et le deuxième fluide est des gaz d'échappement provenant d'un moteur (1) à combustion.

10. Système d'échappement comprenant
- un système de dosage selon l'une quelconque des revendications précédentes, et
- un tuyau (9) d'échappement au travers duquel s'écoule le deuxième fluide, dans lequel la sortie de la buse est disposée de manière à amener le premier fluide dans le deuxième fluide.

11. Méthode de dosage d'un premier fluide dans un flux d'un deuxième fluide au moyen d'un système de dosage comprenant une valve (6), une buse (3) possédant une sortie disposée en aval de la valve (6), un passage d'écoulement (5) au travers duquel le premier fluide peut s'écouler depuis un réservoir (4) vers la sortie de la buse en passant par la valve (6), et un système de commande (7), la méthode comprenant les étapes suivantes :
- mesure des valeurs d'un ou plusieurs paramètres au moyen d'un ou plusieurs capteurs (8),
- utilisation des valeurs mesurées comme entrée pour le système de commande (7),
- détermination d'une valeur de demande sur la base de l'entrée,
- comparaison de la valeur de demande avec une valeur seuil prédéterminée, et
- quand la valeur de demande est inférieure à la valeur seuil prédéterminée, détermination d'une période d'ouverture de valve qui est indépendante de la valeur de demande, et quand la valeur de demande est supérieure ou égale à la valeur seuil prédéterminée, détermination d'une période d'ouverture de valve qui est dépendante de la valeur de demande,
- dans laquelle l'entrée provenant des un ou plusieurs capteurs (8) comprend des mesures de la température d'une paroi d'un tuyau (9) au travers duquel s'écoule le deuxième fluide, et
- dans laquelle le premier fluide n'est pas ajouté quand la température de la paroi du tuyau (9) est inférieure à une température critique T_{cr} prédéterminée.

12. Méthode selon la revendication 11 comprenant en outre le pompage du premier fluide au travers du système de dosage.

13. Méthode selon la revendication 11 ou 12, dans laquelle le premier fluide s'écoule par la sortie par intermittence au moins quand la valeur de demande est inférieure à la valeur seuil.

14. Méthode selon l'une quelconque des revendications 11 à 13, dans laquelle l'entrée provenant des un ou plusieurs capteurs (8) comprend des mesures de la température du deuxième fluide.

15. Méthode selon l'une quelconque des revendications 11 à 14, dans laquelle le système de dosage est disposé sur un véhicule à moteur à combustion, et dans laquelle l'entrée provenant des un ou plusieurs capteurs (8) comprend des mesures d'un ou plusieurs des paramètres suivants : consommation de carburant réelle, tours par minute, et charge du moteur.

16. Méthode selon l'une quelconque des revendications 11 à 15, dans laquelle le premier liquide est un agent réducteur, tel que l'urée liquéfiée, et le deuxième fluide est des gaz d'échappement provenant d'un moteur (1) à combustion.
